# NEUE EUROPÄISCHE PATENTSCHRIFT

(11) **EP 2 817 192 B2**
(45) Veröffentlichungstag und Bekanntmachung des Hinweises auf die Entscheidung über den Einspruch: **05.04.2023**
(45) Hinweis auf die Patenterteilung: 01.04.2020
(21) Anmeldenummer: 13706246.9
(22) Anmeldetag: 22.02.2013
(51) Int. Cl.: B61F 3/12

(54) **GELENK FÜR SCHIENENFAHRZEUGE ODER SCHIENENFAHRZEUGTEILE MIT WINKELSENSOR**
COUPLING FOR RAIL VEHICLES OR RAIL VEHICLE PARTS WITH ANGLE SENSOR
ARTICULATION POUR VÉHICULES FERROVIAIRES OU PARTIES DE VÉHICULES FERROVIAIRES, MUNIE D'UN CAPTEUR D'ANGLE

(30) Priorität: 24.02.2012 DE 102012202838
(43) Veröffentlichungstag der Anmeldung: 31.12.2014
(73) Patentinhaber: Bombardier Transportation GmbH, 10785 Berlin (DE)
(72) Erfinder: GRAFF, Mario, 02681 Crostau OT Wurbis (DE); DANIEL, André, 01877 Bischofswerda (DE)
(74) Vertreter: Patentanwälte Bressel und Partner mbB
(86) Internationale Anmeldenummer: PCT/EP2013/053585
(87) Internationale Veröffentlichungsnummer: WO 2013/124429

(56) Entgegenhaltungen:
- EP-A1- 1 157 912
- EP-A2- 0 557 892
- WO-A1-99/15387
- DE-A1- 19 828 900
- FR-A1- 2 278 550

## Beschreibung

Die Erfindung betrifft eine Einrichtung zur Steuerung der Türöffnung bei gelenkig miteinander verbundenen Schienenfahrzeugen und/oder Schienenfahrzeugteilen, und ein Verfahren zur Steuerung der Türöffnung von gelenkig miteinander verbundenen Schienenfahrzeugen oder Schienenfahrzeugteilen.

Bei Schienenfahrzeugverbünden mit gelenkig verbundenen Schienenfahrzeugen oder Schienenfahrzeugteilen ist es erforderlich, die Stellung der Schienenfahrzeuge oder Schienenfahrzeugteile zueinander zu ermitteln, beispielsweise bei einer Fahrt durch eine Kurve oder bei einem Haltepunkt in einer Kurve. Mit dieser Information kann beispielsweise die Fahrzeuggeschwindigkeit und Fahrzeugbeschleunigung des Schienenfahrzeugverbunds bei einer Kurvenfahrt geregelt werden. Je enger der Kurvenradius ist, desto mehr sind die Schienenfahrzeuge oder Schienenfahrzeugteile zueinander gedreht und desto geringer muss die Beschleunigung und/oder die Geschwindigkeit gewählt werden, um ein Entgleisen des Fahrzeugs zu verhindern. Eine weitere Anwendung ist die Steuerung der Türöffnung. Wenn beispielsweise zwei Schienenfahrzeuge oder Schienenfahrzeugteile des Schienenfahrzeugverbunds zueinander gedreht sind, dann kann ein Türblatt oder Türflügel einer Schwenkschiebetür, das/die an einem der Schienenfahrzeuge oder Schienenfahrzeugteil angeordnet ist, beim Öffnen gegen den anderen Schienenfahrzeugteil oder gegen einen Verbindungsteil, das die beiden Schienenfahrzeugteile verbindet, beispielsweise einen Balg, stoßen. Betroffen sind sowohl kurveninnenseitige Türen wie kurvenaußenseitige Türen, insbesondere aber eine Tür, die sich auf der Kurveninnenseite befindet. Um ein Anstoßen zu verhindern, wird die Bewegung dieses Türflügels je nach Stellung der Schienenfahrzeuge oder Schienenfahrzeugteile zueinander durch eine Steuerung begrenzt oder die Öffnung des Türflügels ganz verhindert. Hierbei spricht man von der Steuerung der Türöffnungsweite.

Eine bekannte Methode zur Steuerung der Fahrzeugbeschleunigung, der Fahrzeuggeschwindigkeit und der Türöffnungsweite ist die Erfassung der Stellung der Schienenfahrzeuge oder Schienenfahrzeugteile zueinander mittels eines oder mehrerer End- oder Näherungsschalter zur Feststellung eines Soll- oder Grenzwertes. Hierbei sind die End- oder Näherungsschalter im Übergangsbereich zwischen den Schienenfahrzeugen oder Schienenfahrzeugteilen angeordnet. Diese Methode wird bei dem Gelenktriebwagen NGT D12DD des Herstellers Bombardier Transportation, 2003-2010 an die Dresdner Verkehrsbetriebe ausgeliefert, angewandt. Die End- oder Näherungsschalter sind beispielsweise im Bereich des Gelenklagers oder außerhalb des Bereiches des Gelenklagers angeordnet, beispielsweise im Bereich einer Drehscheibe, die zwischen benachbarten Schienenfahrzeugteilen angeordnet ist.

Nachteilig ist bei dieser Lösung eine relativ aufwendige Montage und Justierung. Zudem ist die Genauigkeit der Steuerung von Beschleunigung, Geschwindigkeit und Türöffnung nicht im erwünschten Maße gegeben. Außerdem kann nur ein binäres Signal (Ein/Aus) ausgegeben werden. Soll dieses Signal bei einem anderen Winkel ausgeben werden, ist eine aufwendige Umpositionierung des Sensors notwendig. Schließlich benötigt die Lösung relativ viel Platz zur Montage und sind nicht so verschleißfrei wie erwünscht.

Die vorliegende Erfindung hat die Aufgabe, das im vorangehenden Absatz genannte Problem der Steuerung der Türöffnung zu lösen.

Als weiterer Stand der Technik betrifft die EP 0 557 892 A2 ein motorisiertes Drehgestell mit vier Rädern, die drehbar an einem Fahrgestell angebracht sind, an dem mindestens eine Karosserie eines Fahrzeugs durch einen Vertikalachsen-Drehzapfen drehbar angebracht ist. Das Drehgestell umfasst insbesondere einen Sensor, der den Absolutwert und das Vorzeichen des Drehwinkels des Fahrzeugkörpers relativ zum Drehgestell um eine vertikale Achse erfassen kann.

WO 99 15387 A1 offenbart ein Fahrzeug mit einem ersten und einem zweiten Wagen, deren Längsachsen einen Winkel bilden, die an einem Gelenk miteinander verbunden sind und um eine Achse relativ zueinander drehbar sind. Das Fahrzeug umfasst eine erste Messvorrichtung zum Messen des Winkels zwischen den Längsachsen des ersten und des zweiten Wagens, einen Aktuator zum Ausrichten des ersten Drehgestells in Bezug auf die Wagen und ein Berechnungselement, das auf der Grundlage des gemessenen Winkels ein Signal an den Aktuator zum Ausrichten der Radachsen erzeugt.

Angegeben werden von der vorliegenden Erfindung eine Einrichtung nach Anspruch 1 und ein Verfahren nach Anspruch 3.

Ein Winkelsensor ist ein Sensor, der in einem bestimmten Winkelbereich, welcher von der Spezifikation des Sensors abhängt, verschiedene Winkel detektieren kann. Ein beispielhafter und nicht beschränkender Winkelbereich ist 0° bis +/-40°. Somit kann innerhalb des Messbereichs des Sensors ein Winkel, den die Schienenfahrzeuge oder Schienenfahrzeugteile zueinander einnehmen, erfasst werden. Innerhalb des Winkelbereichs kann der Sensor vorzugsweise kontinuierliche Winkel erfassen. Es ist aber bei einer anderen Art Winkelsensor auch möglich, dass der Sensor innerhalb des Winkelbereichs diskrete Winkelwerte mit einer bestimmten Schrittweite erfassen kann. Anders ausgedrückt ist/sind der/die Sensor(en) oder die Sensoranordnung(en) zur kontinuierlichen Bestimmung des Winkels oder zur Erfassung diskreter Winkelwerte in einer bestimmten Schrittweite eingerichtet.

Der Einsatz eines Winkelsensors bietet den Vorteil, dass die Türöffnungohne Modifikation des Winkelsensors auf variable Winkel der Schienenfahrzeuge oder Schienenfahrzeugteile zueinander angepasst werden kann. Im Gegensatz dazu muss bei den bekannten End- oder Näherungsschaltern die mechanische Positionierung des Schalters geändert werden, um eine andere Position der Schienenfahrzeuge oder Schienenfahrzeugteile zueinander detektieren zu können. Sollen verschiedene Drehpositionen der Schienenfahrzeuge oder Schienenfahrzeugteile zueinander erfasst werden, so kann dies mit einem einzigen Winkelsensor erfolgen, wogegen im Stand der Technik dafür mehrere End- oder Näherungsschalter notwendig wären. Die Lösung ist platzsparend und einfach und es sind weniger zusätzliche Bauteile notwendig als im Stand der Technik. Ferner ist die Montage und Einstellung deutlich einfacher.

Wenn mehrere Winkelsensoren eingesetzt werden, um einen Winkel zwischen den Längsachsen zweier Schienenfahrzeuge oder Schienenfahrzeugteile zu bestimmen, wird in der vorliegenden Erfindung von einer "Sensoranordnung" gesprochen.

Winkelsensoren sind aus dem Stand der Technik bekannt und mit verschiedensten Charakteristika, beispielsweise messbarer Winkelbereich, Auflösung, Art des Ausganges (Strom, Spannung, Bus-Signal, Frequenz), Wiederholgenauigkeit, Linearität erhältlich.

Bei dem Sensor kann es sich z.B. um einen potentiometrischen Sensor, einen magnetoresistiven Sensor, einen Hallsensor, der gemäß dem elektro-magnetischen Halleffekt funktioniert, einen optischen Sensor, einen Sensor, der gemäß dem piezoelektrischen Effekt funktioniert, einen kapazitiven Sensor, einen induktiven Sensor, einen zur Abstands- und/oder Relativpositionsmessung ausgestalteten Wirbelstromsensor oder um einen Sensor handeln, der gemäß zumindest einer der genannten Funktionsweisen und/oder zumindest einer nicht genannten Funktionsweise arbeitet. Insbesondere magnetoresistive Sensoren und Hallsensoren können auch zu mehreren auf einem gemeinsamen Träger angeordnet sein, z. B. einem Mikroträger, ähnlich einem Mikrochip. Optische Sensoren erfassen z.B. eine von mehreren Markierungen, die an dem Gelenk ausgebildet sind, wenn sich die Markierung aus Sicht des Sensors vorbeibewegt. Bei einer anderen Art optischer Sensoren wird z.B. eine Laser-Triangulation durchgeführt und/oder wie bei einem Interferometer ein Vergleich mit einem Vergleichslichtstrahl durchgeführt. Bei einer weiteren Art optischer Sensoren werden an einer Stelle des Gelenks projizierte Muster erfasst.

Winkelsensoren sind z.B. angegeben in dem Artikel von William J. Fleming, "Overview of Automotive Sensors", IEEE Sensors Journal, Vol. 1, No. 4, Seite 296-308, Abschnitt C, Seiten 302/303.

Der Begriff "Gelenk" oder "Drehgelenk" bezeichnet ein Gelenk, um das ein erstes Schienenfahrzeug um eine senkrecht nach oben stehende Z-Achse des ersten Schienenfahrzeugs relativ zu einem zweiten Schienenfahrzeug gedreht werden kann, wobei das erste und das zweite Schienenfahrzeug mit dem Gelenk aneinander gekoppelt sind. Außerdem bezeichnet der Begriff "Gelenk" oder "Drehgelenk" ein Gelenk, um das ein erster Schienenfahrzeugteil um eine senkrecht nach oben stehende Z-Achse des ersten Schienenfahrzeugteils relativ zu einem zweiten Schienenfahrzeugteil gedreht werden kann, wobei der erste und der zweite Schienenfahrzeugteil mit dem Gelenk aneinander gekoppelt sind.

Die Längsachse eines Schienenfahrzeugs oder Schienenfahrzeugteils wird auch als X-Achse bezeichnet. Eine Y-Achse eines Schienenfahrzeugs oder Schienenfahrzeugteils steht quer zum Schienenfahrzeug oder Schienenfahrzeugteil und senkrecht zur X- und Z-Achse des Schienenfahrzeugs/Schienenfahrzeugteils. Das Gelenk ist so ausgestaltet, dass ein Schienenfahrzeug oder Schienenfahrzeugteil relativ zu dem benachbarten Schienenfahrzeug(teil) auch
- um seine X-Achse gedreht werden kann (Wankbewegung), und/oder
- um seine Y-Achse gedreht werden kann (Nickbewegung).
Vorzugsweise sind Bewegungen um die X-, Y- und Z-Achse möglich.

Das Gelenk weist vorzugsweise zwei relativ zueinander drehbare Gelenkteile auf. Das eine Gelenkteil ist beispielsweise mit einem ersten Schienenfahrzeug oder Schienenfahrzeugteil verbunden und ein zweites Gelenkteil ist mit einem zweiten Schienenfahrzeug oder Schienenfahrzeugteil verbunden. Der Begriff "Gelenkteil" bezeichnet irgendein Teil des Gelenks, wobei das Teil für die eigentliche Gelenkfunktion nicht unbedingt erforderlich sein muss. Ein Gelenkteil kann beispielsweise nur ein Teil sein, das zur Befestigung eines Sensors oder Magneten dient, wie nachfolgend und in den Beispielen beschrieben. Die Bauart des Gelenks ist nicht besonders beschränkt, unter der Voraussetzung, dass ein Winkelsensor an dem Gelenk anbringbar ist.

Wenn die Längsachsen zweier benachbarter, gelenkig verbundener Schienenfahrzeuge oder Schienenfahrzeugteile auf einer Flucht liegen, beispielsweise auf einer geraden, kurvenfreien Strecke, dann beträgt der Winkel zwischen den Längsachsen der Schienenfahrzeuge oder Schienenfahrzeugteile definitionsgemäß 0°, bezeichnet als Nulllage.

Der Sensor kann einen absoluten Winkel zwischen Schienenfahrzeugen oder Schienenfahrzeugteilen messen oder der Sensor kann eine Winkeländerung messen und diese zu einem Referenzwinkel, beispielsweise der Nulllage, in Bezug setzten, sodass der Winkel zwischen Schienenfahrzeugen oder Schienenfahrzeugteilen bestimmbar ist.

Beispiele für Schienenfahrzeuge sind, ohne Beschränkung, Lokomotiven, Waggons, Triebwagen, Straßenbahnwagen. Ein Schienenfahrzeug weist vorzugsweise einen abgeschlossenen Raum auf, der von einem Wagenkasten umgeben ist.

Schienenfahrzeugteile sind beispielsweise Module, die zu einem Schienenfahrzeug zusammengesetzt werden. Insbesondere sind die Schienenfahrzeugteile Module einer Straßenbahn. Beispielsweise sind Schienenfahrzeugteile miteinander über eine flexible Struktur, insbesondere einen gelenkigen Balg, verbunden. Das Gelenk zwischen den Schienenfahrzeugteilen befindet sich insbesondere im Bereich des Bodens, vorzugsweise unterhalb des Fußbodens. Gelenke zwischen Wagen oder Schienenfahrzeugteilen können aber stattdessen oder zusätzlich im Bereich des Daches angeordnet sein.

Der Gelenkpunkt ist der Punkt, wo sich mindestens die X-Achse oder Y-Achse mit der Z-Achse schneidet. Dies bedeutet, dass am Gelenkpunkt die X-Achse und/oder die Y-Achse die Z-Achse schneidet.

Jedes der Schienenfahrzeuge oder Schienenfahrzeugteile, die durch das Gelenk verbunden sind, weist eine X-Achse auf. Jede der X-Achsen schneidet im Gelenkpunkt die Z-Achse, und vorzugsweise auch die Y-Achse.

Der Sensor kann so ausgestaltet sein, dass er eine Signalfolge erzeugt. Mit einer Signalfolge ist insbesondere gemeint, dass der Sensor nach Änderung des Winkels um einen konstanten Betrag (Winkelinkrement) ein Signal ausgibt, so dass nach Änderung um ein Winkelinkrement ein Signal erzeugt wird, nach Änderung um zwei Winkelinkremente zwei Signale usw. Man erhält so eine Signalfolge, aus der man die Zahl der Winkelinkremente und daraus wiederum eine gesamte Winkeländerung ermitteln kann. Der Begriff "Signal" beinhaltet somit in der vorliegenden Erfindung auch eine Signalfolge.

Der Winkelsensor kann ein berührungsloser Winkelsensor sein. Der Begriff "berührungslos" bedeutet in einer seiner Bedeutungsformen, dass der Sensor an einem ersten Gelenkteil angebracht ist und ein zweites Gelenkteil, das relativ zu dem ersten Gelenkteil drehbar ist, nicht berührt. Beispielsweise kann ein Magnetsensor an dem ersten Gelenkteil angebracht sein und ein Magnet, auf den der Magnetsensor reagiert, kann an dem zweiten Gelenkteil angebracht sein. In einer weiteren Bedeutungsform bedeutet der Begriff "berührungslos", dass der Sensor ein erstes und ein zweites Element aufweist, wobei das erste Element an einem ersten Gelenkteil angebracht ist und das zweite Element an einem zweiten Gelenkteil angebracht ist, wobei sich das erste und das zweite Element des Sensors nicht berühren und wobei das erste und das zweite Gelenkteil, und das erste und das zweite Element des Sensors, relativ zueinander drehbar sind. Das bedeutet, dass durch eine relative Drehung der Gelenkteile die daran angebrachten Sensorelemente relativ zueinander drehbar sind.

Bevorzugte Beispiele für berührungslose Winkelsensoren sind Magnetsensoren, optische Sensoren und induktive Sensoren. Der Begriff "Magnetsensoren" bezeichnet Sensoren, die auf die Änderung eines Magnetfeldes in ihrer Umgebung, insbesondere die Änderung einer magnetischen Flussdichte, reagieren. Sie können alternativ auch als "Magnetfeldsensitive-Sensoren" bezeichnet werden. Bevorzugte Beispiele für Magnetsensoren sind Hall-Sensoren und magnetoresistive Sensoren. Berührungslose Magnetsensoren sind beispielsweise in US 5,880,586 A beschrieben.

In einer speziellen Ausführungsform weist das in der erfindungsgemäßen Einrichtung und dem erfindungsgemäßen Verfahren enthaltene Gelenk ein erstes und ein zweites Gelenkteil auf, die relativ zueinander drehbar sind, und bei dem der Sensor an dem ersten Gelenkteil angebracht ist und ein Magnet an dem zweiten Gelenkteil angebracht ist, sodass bei einer Drehung der Gelenkteile zueinander der Magnet relativ zu dem Sensor gedreht wird und im Sensor ein Signal erzeugt wird, das von der Stellung des Magneten relativ zum Sensor abhängig ist und woraus der Winkel zwischen den Längsachsen der Schienenfahrzeuge oder Schienenfahrzeugteile bestimmbar ist.

Das Signal ist ändert sich mit der Änderung der Stellung des Magneten relativ zum Sensor, wenn bei einer Drehung der Gelenkteile zueinander der Magnet relativ zu dem Sensor gedreht wird. Bei einer Änderung der Stellung des Magneten relativ zum Sensor ändert sich die Flussdichte des Magnetfeldes in Bezug zum Sensor.

In einer bevorzugten Variante wird ein Hall-Sensor eingesetzt. Das vom Drehwinkel abhängige Signal ist dann beispielsweise ein sich sinusförmig änderndes Spannungssignal oder - bei Einsatz mehrerer zueinander versetzt positionierter Hallelemente - mehrere sich sinusförmig ändernde Spannungssignale, die zueinander phasenverschoben sind. Aus diesen Signalen kann in bekannter Weise der Winkel zwischen den Längsach-sen der Schienenfahrzeuge oder Schienenfahrzeugteile ermittelt werden.

Der in dieser Offenbarung verwendete Begriff "Schienenfahrzeug(teil)verbund" ist ein Sammelbegriff für "Schienenfahrzeugverbund" und "Schienenfahrzeugteil-Verbund".

Ein Schienenfahrzeugverbund ist aus Schienenfahrzeugen zusammensetzt. Die Schienenfahrzeuge des Schienenfahrzeugverbunds können wiederum aus Schienenfahrzeugteilen zusammengesetzt sein. Ein spezielles Beispiel für einen Schienenfahrzeugverbund, ist eine Straßenbahn, die aus mehreren Straßenbahnwagen zusammengesetzt ist. Die Straßenbahnwagen können wiederum aus mehreren Modulen zusammengesetzt sein.

Ein Schienenfahrzeugteil-Verbund ist aus Schienenfahrzeugteilen zusammengesetzt. Ein spezielles Beispiel ist eine Straßenbahn, die nur aus Modulen zusammengesetzt ist, ohne dass mehrere Wagen vorhanden sind.

Statt eines einzelnen Sensors kann, wie auch bei dem Gelenk, eine Anordnung mehrerer Sensoren verwendet werden. Der Sensor oder die Sensoren können bei dem Schienenfahrzeug(teil)verbund an jeder geeigneten Stelle, die für den Sensor und für die Winkelmessung geeignet ist, angebracht sein. Besonders bevorzugt ist der Sensor/sind die Sensoren im Bereich des Gelenks oder am Gelenk selbst angebracht.

Auf die Steuerung der Türöffnung wurde bereits in der Einleitung eingegangen. Wenn zwei benachbarte Schienenfahrzeuge oder Schienenfahrzeugteile so zueinander gedreht sind, dass der Winkel zwischen den Längsachsen der Schienenfahrzeuge oder Schienenfahrzeugteile ungleich Null ist (Abweichung von der oben definierten Nulllage), kann das Türblatt einer Schwenkschiebetür, die an einem der beiden Schienenfahrzeuge oder Schienenfahrzeugteile angeordnet ist, beim Öffnen gegen das andere Schienenfahrzeug oder den anderen Schienenfahrzeugteil stoßen, oder gegen ein Verbindungsteil, das zwei Schienenfahrzeugteile miteinander verbindet, beispielsweise einen Balg. Betroffen ist insbesondere ein Türblatt einer Tür, die sich auf der Kurveninnenseite befindet und betroffen ist insbesondere eine Tür, die im Bereich des Endes eines Schienenfahrzeugs angeordnet ist, an welches das benachbarte zweite Schienenfahrzeug angekoppelt ist, oder eine Tür, die im Bereich des Endes eines Schienenfahrzeugteils angeordnet ist, an das ein benachbarter zweiter Schienenfahrzeugteil anschließt, beispielsweise über ein gelenkiges Verbindungselement, wie einen Balg. Um ein Anstoßen eines Türblatts zu verhindern, wird die Bewegung dieses Türblatts je nach Stellung der Schienenfahrzeuge oder Schienenfahrzeugteile zueinander durch eine Steuerung begrenzt oder die Öffnung des Türblatts ganz verhindert. Dies ist mit dem Begriff "Steuerung der Türöffnung" oder "Steuerung der Öffnung der Tür" gemeint.

Die Art der Sensoren und bevorzugte Sensoren wurden bereits anhand des zuvor beschriebenen Gelenks erläutert und sind auch für die Einrichtung zur Steuerung der Türöffnung gültig. Das gleiche gilt für die Anordnung des Sensors bzw. der Sensoranordnungen.

Das Signal des Sensors ist beispielsweise eine vom Sensor ausgegebene Spannung oder ein Strom. Das Signal kann in einer analogen Signalverarbeitungseinrichtung verarbeitet werden. Das Signal des Sensors kann alternativ, oder zusätzlich, zu einem Analog-Digital-Wandler geleitet werden und als digitales Signal zur anschließenden Signalverarbeitungseinrichtung weitergeleitet werden. Die Signalverarbeitungseinrichtung wird auch als Recheneinheit bezeichnet.

Die Signalverarbeitungseinrichtung führt einen Algorithmus aus, so dass am Ausgang der Signalverarbeitungseinrichtung das oder die gewünschten Ausgangssignale bereit stehen. Bei dem Winkelsensor wird von der Signalverarbeitungseinrichtung eine Winkelinformation als analoges oder digitales Signal zur Verfügung gestellt. Das Winkelsignal kann an ein Interface eingespeist werden, das die Signalausgabe an externe Anschlüsse vorsieht oder eine weitere Verarbeitung eines Winkelsignals durchführt.

Die Signalverarbeitungseinrichtung kann als digitaler Signalprozessor (DSP) ausgebildet sein. Bei dem Winkelsensor wird dieser auch als CORDIC (Coordinate Rotational Digital Computer) bezeichnet. Ein möglicher Algorithmus ist in dem Artikel von Cheng-Shing Wu u.a. " Modified vector rotational CORDIC (MVR-CORDIC) algorithm and architecture", IEEE Transactions on Circuits and Systems II: Analog and Digital Signal Processing, Vol. 48, No. 6, June 2001, Seiten 548 bis 561, beschrieben.

Das Signal des Sensors kann in einem Vorverstärker verstärkt und danach zum Analog-Digital-Wandler geleitet werden. Am Ausgang des Analog- DigitalWandlers kann gegebenenfalls eine digitale Filterung erfolgen bevor das digitalisierte Signal in der Signalverarbeitungseinrichtung verarbeitet wird. Ein solcher Ablauf und ein spezieller Hall Sensor sind beschrieben in US 2007/0279044 A.

Eine Signalverarbeitungseinrichtung kann an verschiedenen Stellen angeordnet sein, beispielsweise als eigenständige bauliche Einheit zwischen dem Sensor und nachgeschalteten Komponenten, wie einem Signalübertragungsbus, einer Fahrzeugsteuerung, einer Fahrzeug- und Zugsteuerung, einer Steuerungseinrichtung für die Türöffnung. Wenn das Signal des Sensors digitalisiert wird, ist zwischen den Sensor und die Signalverarbeitungseinrichtung der A/D-Wandler geschaltet.

Die Signalverarbeitungseinrichtung ist vorzugsweise ein Bestandteil einer Fahrzeugsteuerung (abgekürzt VCU, vehicle control unit) oder einer Fahrzeug- und Zugsteuerung (abgekürzt VTCU, vehicle and train control unit), wobei die Fahrzeugsteuerung, ebenso wie eine Fahrzeug- und Zugsteuerung, vorzugsweise aus mehren, über Bus-Systeme oder Kabel verbundenen Steuergeräten, Wandlern, Sensoren, Aktuatoren und gegebenenfalls weiteren Komponenten besteht. Die Signalverarbeitungseinrichtung kann auch in eine Steuerungseinrichtung für die Türöffnung integriert sein.

Eine Steuerungseinrichtung für die Türöffnung wird auch als Türsteuereinrichtung oder Türsteuergerät bezeichnet.

Die Verfahrensschritte sind der Übersichtlichkeit nur bezüglich eines Sensors formuliert. Es können aber selbstverständlich mehrere Signale und/oder Signalfolgen erzeugt und verarbeitet werden, wenn mehrere Sensoren bzw. Sensoranordnungen vorhanden sind. Auch bezüglich einer Sensoranordnung wird in den Verfahrensschritten von einem Sensor gesprochen, wobei jede Sensoranordnung mehrere Sensoren aufweist, die jeweils ein Signal oder eine Signalfolge erzeugen können. Diese Betrachtungen gelten auch für die nachfolgend noch beschriebenen Verfahren.

Insbesondere umfasst das Verfahren ein Verfahren zur Bestimmung der Winkelposition von gelenkig miteinander verbundenen Schienenfahrzeugen oder Schienenfahrzeugteilen eines Schienenfahrzeug(teil)verbunds.

Zu den Sensoren oder der Sensoranordnung wird Bezug auf die vorangehende Offenbarung genommen. Der Begriff "Signalfolge" wurde bereits zuvor erläutert.

Die in dem erfindungsgemäßen Verfahren verwendbare Signalverarbeitungseinrichtung wurde bereits zuvor erläutert.

Mit dem erfindungsgemäßen Verfahren kann die Öffnung einer oder mehrerer Türen gesteuert werden. Bei dem Verfahren ist mindestens eine Tür an einem der beiden Schienenfahrzeuge oder Schienenfahrzeugteile angeordnet. Bei mehreren Türen können diese an verschiedenen Fahrzeugen/Fahrzeugteilen angeordnet sein. Die Tür ist vorzugsweise eine Schwenkschiebetür mit ein oder zwei Türblättern. Schwenkschiebetüren werden vielfach in Fahrzeugen des öffentlichen Nahverkehrs eingesetzt. Typischerweise schließen sie im geschlossenen Zustand bündig mit der Außenwand des Fahrzeugs ab. Bei der Öffnung bewegt sich die Schwenkschiebetür zunächst nach außen und wird dann zur Seite verschoben. Die Bewegung seitwärts kann jedoch auch bereits während der Bewegung nach außen beginnen. Dies bedeutet, dass die Tür trotz dem Begriff "Schwenken" keine isolierte Schwenkbewegung ausführen muss, eine Schwenkbewegung aber stattfinden kann. Die Bezeichnung Schwenkschiebetür wird in der Praxis aber verwendet, da bei vielen solcher Türen beim Öffnen und Schließen eine Schwenkbewegung ausgeführt wird.

Anwendbar ist das Verfahren insbesondere bei einer Tür, die im Berei es Endes eines Schienenfahrzeugs angeordnet ist, an welches ein benachbartes zweites Schienenfahrzeug angekoppelt ist, oder bei einer Tür, die im Bereich des Endes eines Schienenfahrzeugteils angeordnet ist, an das ein benachbarter zweiter Schienenfahrzeugteil anschließt.

Bei dem vorangehenden Verfahren sind die mindestens zwei Schienenfahrzeuge oder zwei Schienenfahrzeugteile mit einem Gelenk mit einem Sensor verbunden, wie zuvor beschrieben.

Die Elemente des zuvor erwähnten Schienenfahrzeugverbunds, wie Schienenfahrzeuge oder Schienenfahrzeugteile und Sensoren oder Sensoranordnungen, wurden bereits zuvor erläutert. Ebenfalls wird bei der Signalverarbeitungseinrichtung und der Steuerungseinrichtung, die in den vorangehend beschriebenen Verfahren eingesetzt werden, Bezug auf die weiter oben ausgeführte Offenbarung genommen.

Das Sensorsignal oder Signal der Sensoranordnung wird vorzugsweise in ein digitales Signal umgewandelt, so dass es an folgenden Stationen, beispielsweise in der Signalverarbeitungseinrichtung, in digitaler Form weiter verarbeitet werden kann.

Nachfolgend wird die Erfindung anhand von Ausführungsbeispielen beschrieben. Es zeigen:
- Fig. 1: zwei miteinander gelenkig verbundene Schienenfahrzeugteile,
- Fig. 2: einen Ausschnitt aus der Fig. 1, in dem das Gelenk zwischen den beiden Schienenfahrzeugteilen gezeigt ist,
- Fig. 3: eine Detailansicht des Gelenks der Fig. 2,
- Fig. 4: eine Ansicht des Gelenks zwischen zwei Schienenfahrzeugteilen von oben,
- Fig. 5: einen vergrößerten Ausschnitt aus der Fig. 4, der das Gelenk zeigt,
- Fig. 6: ein Ausschnitt aus der Struktur eines Schienenfahrzeugs mit verschiedenen Steuerungseinrichtungen, und
- Fig. 7: eine Anordnung aus Sensor und Türsteuerung.

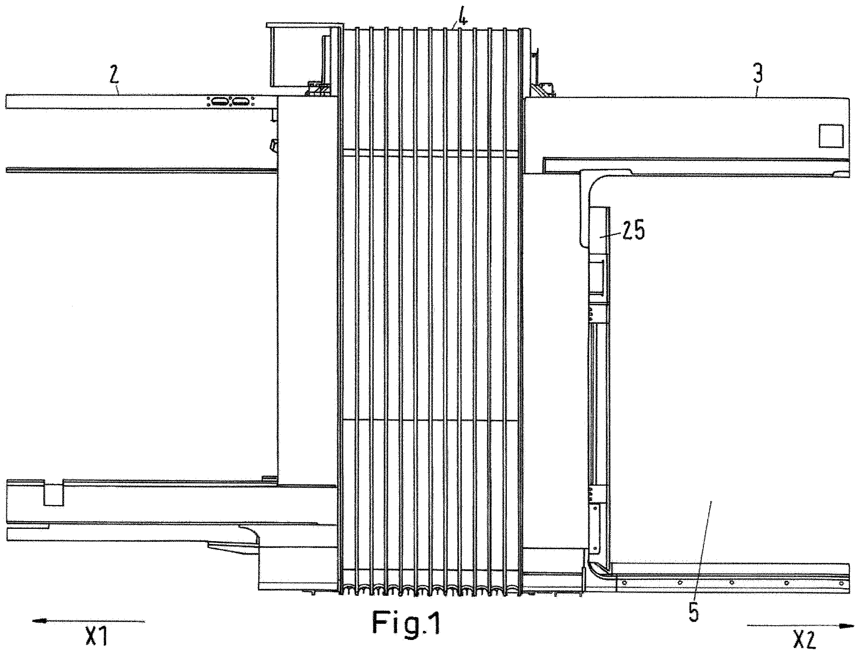

Die Fig. 1 zeigt einen Schienenfahrzeugteil 2, hier nur teilweise dargestellt mit strukturellen Elementen des Wagenkastens, und einen Schienenfahrzeugteil 3, ebenfalls nur teilweise dargestellt mit strukturellen Elementen des Wagenkastens. Beide Schienenfahrzeugteile 2, 3 sind mit einem Balg 4 verbunden. Im Schienenfahrzeugteil 3 ist eine Türöffnung 5 in der Nähe des Balgs 4 angeordnet. Ein Teil eines Türflügels 25, der in Richtung des Balgs 4 geöffnet ist, ist noch sichtbar. Der Balg 4 verdeckt ein Gelenk 1, das im unteren Bereich der Schienenfahrzeugteile 2, 3 angeordnet ist. Die Längsachse des Schienenfahrzeugteils 2 ist als X1-Achse in Form eines Pfeils eingezeichnet. Die Längsachse des Schienenfahrzeugteils 3 ist als X2-Achse in Form eines Pfeils eingezeichnet. Die Längsachsen X1, X2 liegen in der Zeichnungsebene. In der Stellung der Schienenfahrzeugteile gemäß Fig. 1 sind die Längsachsen X1 und X2 beider Schienenfahrzeugteile fluchtend, also in einer Gerade angeordnet, sodass der Winkel zwischen den Achsen X1 und X2 Null beträgt.

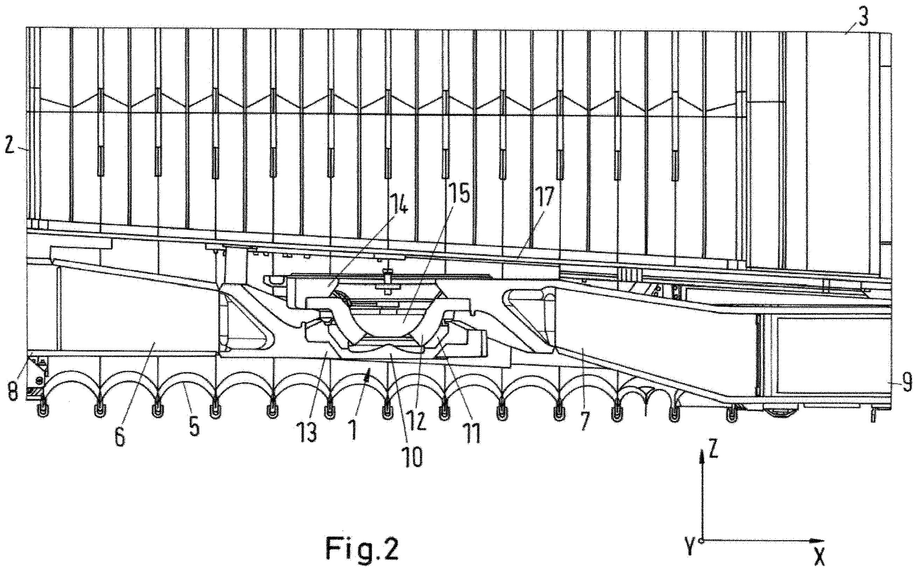

Die Fig. 2 zeigt einen Schnitt durch den unteren Teil des Balgs 4 und das Gelenk 1. Ein erster Gelenkträger 6 ist mit dem ersten Schienenfahrzeugteil 2 verbunden und ein zweiter Gelenkträger 7 ist mit dem zweiten Schienenfahrzeugteil 3 verbunden. Die Gelenkträger 6, 7 sind jeweils mit Trägern 8, 9 in den Untergestellen der Schienenfahrzeugteile 2, 3 verbunden.

Das Gelenk 1 weist am Gelenkträger 6, der mit dem ersten Schienenfahrzeugteil 2 verbunden ist, ein Lagerunterteil 10 auf, Das Lagerunterteil 10 ist in einem Lagergehäuse 13 des ersten Gelenkträgers 6 fixiert. Das Lagerunterteil 10 trägt das Gleitstück 11, das beispielsweise aus einem verschleißarmen Kunststoff gefertigt ist. In das Gleitstück 11 ist das Lageroberteil 12 eingesetzt, das im Lagergehäuse 14 des zweiten Gelenkträgers 7 fixiert ist. Somit ist das Lageroberteil 12 mit dem zweiten Gelenkträger 7 bzw. mit dem zweiten Schienenfahrzeugteil 3 fest verbunden und das Lagerunterteil 10 und das Gleitstück 11 sind mit dem ersten Gelenkträger 6 und dem ersten Schienenfahrzeugteil 2 verbunden.

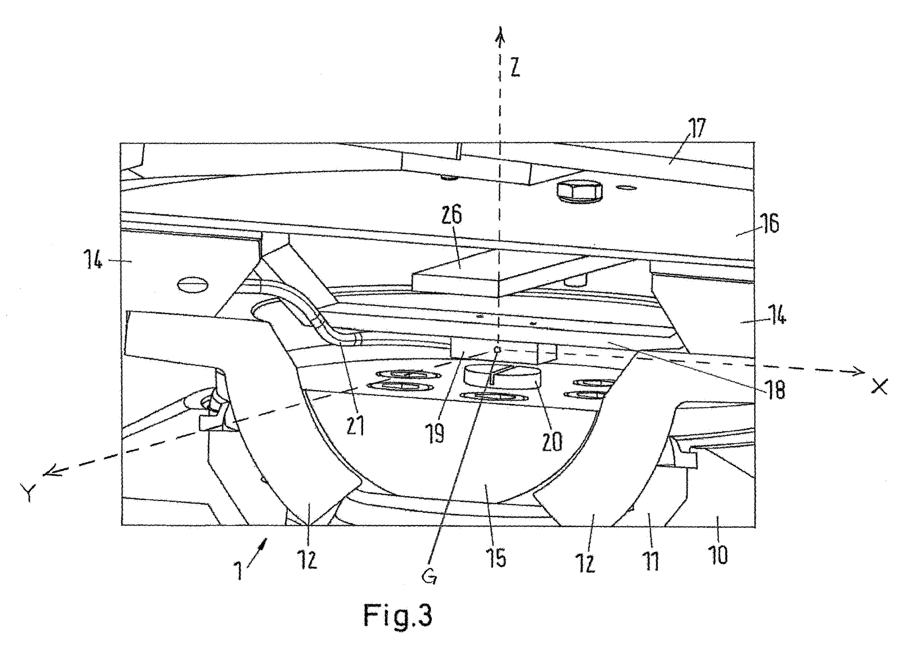

Bei einer Bewegung der Schienenfahrzeugteile 2 und 3 relativ zueinander bewegt sich das Lageroberteil 12 entlang des Gleitstücks 11. Das Lageroberteil 12 hat die Form eines Kugelsegments und das Gleitstück 11 ist komplementär zur äußeren Oberfläche des Lagerteils 12 geformt. Dadurch kann eine Bewegung der beiden Schienenfahrzeugteile 2, 3 relativ zueinander um die X-, Y- und Z-Achse stattfinden, die in der Fig. 2 in Form eines Koordinatensystems angezeichnet sind. In der Fig. 2 verläuft die Blickrichtung des Betrachters entlang der Y-Achse, die senkrecht zur Blattebene steht. Die in Fig. 2. eingezeichnete X-Achse ist die Längsachse des Schienenfahrzeugteils 3, die in der Fig. 1 als X1-Achse bezeichnet ist. Der Schnittpunkt der X-, Y- und Z-Achse des Koordinatensystems zeigt in der Fig. 2 nicht den Gelenkpunkt, da das Koordinatensystem an einer beliebigen Stelle eingezeichnet ist. Die Lage des Gelenkpunkts wird in Fig. 3 gezeigt.

Die Sicherung 15, welche die Form eines Kugelteilstücks aufweist, sitzt im Lageroberteil 12 und sichert dieses in dem Lagerunterteil 10 bzw. auf dem Gleitstück 11. Die Sicherung 15 ist an dem Lagerunterteil 10 fixiert (Fixierung nicht gezeigt) und relativ zum Lagerunterteil 10 nicht beweglich, insbesondere nicht drehbar.

Die Fig. 3 zeigt eine Detailansicht des Gelenks 1. Das Gelenk ist mit einem Gelenkpfannendeckel 16, der auf dem Lagergehäuse 14 des zweiten Gelenkträgers 7 sitzt, verschlossen. Über dem Gelenkpfannendeckel 16 ist eine Drehscheibe 17 angeordnet (s.a. Fig. 2), die im Übergangsbereich zwischen den beiden Schienenfahrzeugteilen 2 und 3 den Fußboden bildet. Am oben angeordneten Lagergehäuse 14 des zweiten Gelenkträgers 7 ist ein Träger 18 angebracht, der sich quer über das Lagergehäuse 14 erstreckt. An der Unterseite des Trägers 18 ist ein Magnetsensor 19, in diesem Fall ein Hall-Sensor, angebracht. Unterhalb des Sensors 19 ist ein Magnet 20 angeordnet, der auf der Sicherung 15 befestigt ist. Das Teil mit dem Bezugszeichen 26 ist ein Halteblech für den Gelenkpfannendeckel 16, der das Lager für Schmutz und Feuchtigkeit schützt.

Bei einer Drehung der Schienenfahrzeugteile 2 und 3 um die Z-Achse, die in der Fig. 3 als Pfeil dargestellt ist, werden der Sensor 19 und der Magnet 20 relativ zueinander um die Z-Achse gedreht, da der Sensor 19 über den Träger 18, das Lagergehäuse 14 und den zweiten Gelenkträger 7 mit dem zweiten Schienenfahrzeugteil 3 verbunden ist und der Magnet 20 über die Sicherung 15, das Lagerunterteil 10, das Lagergehäuse 13 und den ersten Gelenkträger 8 mit dem ersten Schienenfahrzeugteil 2 verbunden ist. Der Sensor 19 berührt weder die Sicherung 15 noch den Magneten 20 und ist somit ein berührungsloser Sensor. Das Signal des Sensors wird über das Sensorkabel 21 zu einer Signalverarbeitungseinrichtung, insbesondere einer Fahrzeugsteuerung (nicht gezeigt), geleitet. Der Magnet 20 ist von kreisförmiger Geometrie, wobei ein Halbkreis den Nordpol und der andere Halbkreis den Südpol des Magneten bildet.

In der Fig. 3 sind neben der Z-Achse gestrichelt auch die Y-Achse und die X-Achse eingezeichnet. Die eingezeichnete X-Achse ist die Längsachse des Schienenfahrzeugteils 3, die in der Fig. 1 als X1-Achse bezeichnet ist. Im Gelenkpunkt G schneiden sich die X-, Y- und Z-Achse. Man erhält bei einem solchen Gelenk den Ort des Gelenkpunkts, wenn man die Sicherung 15, welche die Form eines Kugelteilstücks aufweist, gedanklich zu einer Vollkugel ergänzt und den Kugelmittelpunkt bestimmt. Der Gelenkpunkt G kann auch etwas anders lokalisiert sein, als er in Fig. 3 beispielhaft und nicht unbedingt geometrisch exakt eingezeichnet ist. Wie in Fig. 3 sichtbar, befindet sich der Sensor 19 am Ort des Gelenkpunkts G. Der Sensor kann aber auch an einer anderen Stelle nahe bei dem Ort des Gelenkpunkts G positioniert sein. Der Gelenkpunkt muss nicht unbedingt innerhalb des Sensors liegen (wie hier gezeigt), sondern der Sensor 19 kann so positioniert sein, dass der Gelenkpunkt G außerhalb des Sensors liegt. Der Sensor 19 ist aber vorzugsweise nahe bei dem Gelenkpunkt G angeordnet.

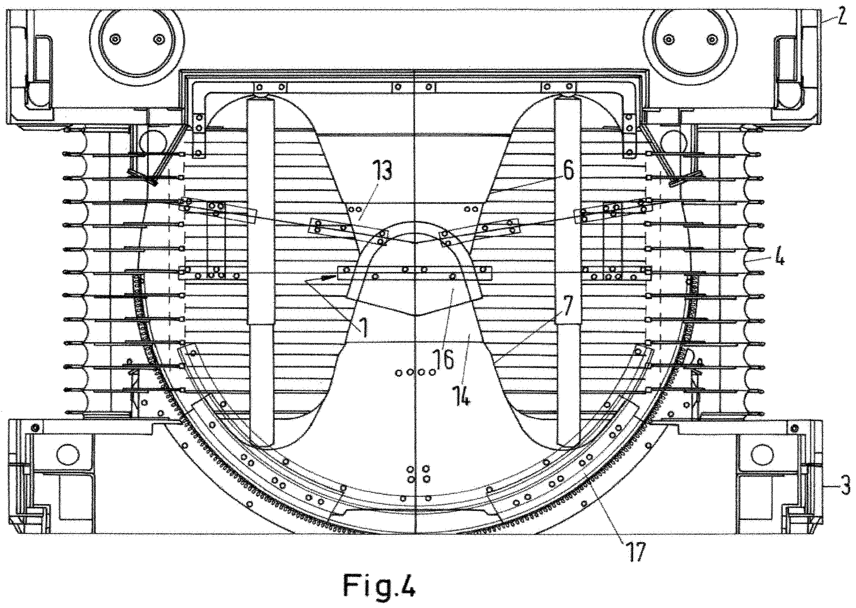

Die Fig. 4 zeigt eine Draufsicht auf das Gelenk von oben entlang der Z-Achse. Die Drehscheibe 17 ist transparent dargestellt und der Blick fällt auf den Gelenkträger 6 des ersten Schienenfahrzeugteils 2 und den Gelenkträger 7 des zweiten Schienenfahrzeugteils 3. An den Enden der Gelenkträger 13, 14 sind jeweils die Lagergehäuse 13 und 14 angebracht. Zwischen den Schienenfahrzeugteilen 2 und 3 ist der Balg 4 angeordnet. Das Gelenk 1 ist nicht sichtbar, da es von dem Gelenkpfannendeckel 16 verdeckt ist.

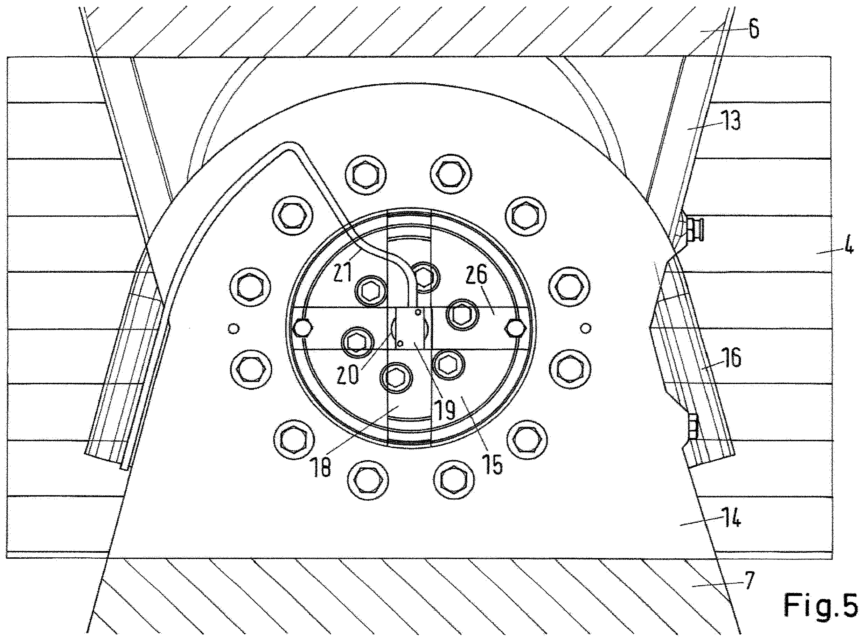

Die Fig. 5 zeigt einen Ausschnitt aus der Fig. 4, wobei der Blick wiederum entlang der Z-Achse fällt. Der Gelenkpfannendeckel 16 ist transparent dargestellt, so dass darunter der Träger 18 zu sehen ist, der mit dem Gelenkträger 7 des zweiten Schienenfahrzeugteils 3 fix verbunden ist. An dem Träger 18 ist, wie auch schon in der Fig. 3 gezeigt, der Sensor 19 fixiert. Unterhalb des Sensors 19 und von dem Sensor 19 teilweise verdeckt ist der Magnet 20 auf der Sicherung 15 angeordnet.

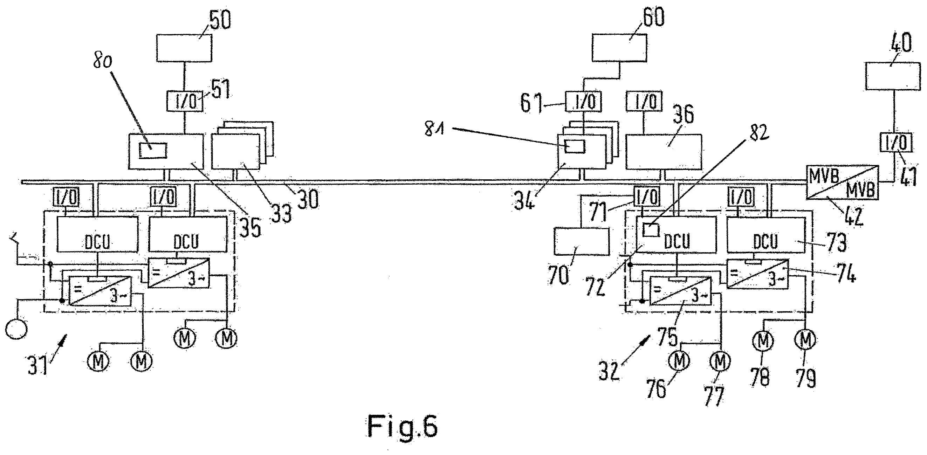

Die Fig. 6 zeigt einen Ausschnitt aus der Elektronik eines leichten Schienenfahrzeugs. An einen Multifunktionsbus 30 sind Traktionseinheiten 31, 32, Steuerungseinrichtungen 33, 34 zur Steuerung der Türöffnung und Fahrzeug- und Zugsteuerungseinrichtungen 35, 36 angebunden. An den Multifunktionsbus 30 können weitere Einrichtungen angebunden sein, die nicht näher dargestellt sind, wie eine Energiezufuhr, eine Bremskontrolle, Fahrgastinformationssysteme und Bedienungseinrichtungen für den Zugführer.

Die Fig. 6 zeigt verschiedene Varianten der Einbindung eines Winkelsensors. Die dargestellten Varianten können alternativ oder kumulativ zur Anwendung kommen.

Ein Sensor 40 ist in einer ersten Variante über einen Analog-Digital-Wandler 41 und die Schnittstelle 42 direkt an den Multifunktionsbus 30 angebunden.

In einer zweiten Variante ist ein Winkelsensor 50 über einen Analog-Digital-Wandler 51 an die Fahrzeug- und Zugsteuerung 35 angeschlossen, die auch mit VTCU (vehicle and train control unit) abgekürzt wird. In den Analog-Digital-Wandler wird ein analoges Signal aus dem Sensor 50 in Form eines Stroms oder einer Spannung eingespeist. Die Verbindung von dem Analog-Digital-Wandler 51 zu der Fahrzeug- und Zugsteuerung 35 kann mit einem Bus erfolgen, z.B. Ethernet oder einem Multifunktionsbus. Von der Fahrzeug- und Zugsteuerung 35 aus kann über den Multifunktionsbus 30 eine Signalweiterleitung an andere Steuergeräte erfolgen, wie z.B. an die Steuerungseinrichtungen 33, 34 zur Steuerung der Türöffnung, oder, nicht erfindungsgemäß, die nachfolgend beschriebenen Antriebssteuereinrichtungen 72, 73, welche die Beschleunigung und/oder Geschwindigkeit des Schienenfahrzeugs steuern. Das digitalisierte Strom- oder Spannungssignal wird mit einer Signalverarbeitungseinrichtung in einen Winkel umgerechnet. Eine oder mehrere Signalverarbeitungseinrichtungen können an unterschiedlichen Orten angeordnet sein, beispielsweise in der Fahrzeug- und Zugsteuerung 35, den Steuerungseinrichtungen 33, 34 zur Steuerung der Türöffnung oder den Antriebssteuereinrichtungen 72, 73. Beispielhaft ist eine Signalverarbeitungseinrichtung 80 gezeigt, die in die Fahrzeug- und Zugsteuerung 35 integriert ist. Beispielhaft ist eine weitere Signalverarbeitungseinrichtung 81 gezeigt, die in die Steuerungseinrichtung 34 zur Steuerung der Türöffnung integriert ist. Beispielhaft (nicht erfindungsgemäß) ist noch eine weitere Signalverarbeitungseinrichtung 82 gezeigt, die in die Antriebssteuereinrichtung 72 integriert ist. Weitere Signalverarbeitungseinrichtungen können vorhanden sein, sind aber nicht eingezeichnet.

In einer weiteren Variante ist ein Winkelsensor 60 über einen Analog-Digital-Wandler 61 an die Steuerungseinrichtung 34 zur Steuerung der Türöffnung angeschlossen. Diese Variante findet dann Anwendung, wenn speziell nur die Türöffnung mittels des Sensors 60 gesteuert werden soll. Das digitalisierte Strom- oder Spannungssignal des Sensors 60 wird mit einer Signalverarbeitungseinrichtung 81 in einen Winkel umgerechnet. Eine Signalverarbeitungseinrichtung kann in der Steuerungseinrichtung 34 angeordnet sein, wie hier gezeigt, oder zwischen dem Analog-Digital-Wandler 61 und der Steuerungseinrichtung 34.

In einer, nicht erfindungsgemäßen, Variante ist ein Winkelsensor 70 über einen Analog-Digital-Wandler 71 an eine Antriebssteuereinrichtung 72, abgekürzt DCU (drive control unit), angeschlossen. Das digitalisierte Strom- oder Spannungssignal des Sensors 70 wird mit einer Signalverarbeitungseinrichtung 82 in einen Winkel umgerechnet. Eine Signalverarbeitungseinrichtung kann in der Antriebssteuereinrichtung 72 angeordnet sein, wie hier gezeigt, oder zwischen dem Analog-Digital-Wandler 71 und der Antriebssteuereinrichtung 72. Die Antriebssteuereinrichtung 72 steuert u.a. die Beschleunigung und/oder Geschwindigkeit des Schienenfahrzeugs und erfüllt daneben weitere Funktionen, die im allgemeinen Beschreibungsteil genannt sind. Die Antriebssteuereinrichtung 72 ist Teil der Traktionseinheit 32, welche noch eine weitere Antriebssteuereinrichtung 73 sowie Stromrichteranlagen 74, 75 aufweist, welche mit Fahrmotoren 76, 77, 78, 79 verbunden sind. In gleicher Weise wie die Traktionseinheit 32 ist die Traktionseinheit 31 aufgebaut.

Zur Bewältigung von Steuerungs-, Schutz- und Überwachungsaufgaben ist jede Antriebssteuereinrichtung 72, 73 mit drei Prozessoren bestückt, die mit MCU, DSP und FPGH abgekürzt werden. Die MCU übernimmt die Ablaufsteuerung auf der Antriebssteuereinrichtung und bereitet alle Daten von der Fahrzeug- und Zugsteuerung für den Signalprozessor DSP auf. Sie sorgt dafür, dass der Stromrichter und der Motor nicht überlastet werden. Alle Fehler, die in der Antriebssteuereinrichtung 72 auftreten, werden von der MCU gesammelt und die nötigen Maßnahmen werden ergriffen. Der Signalprozessor DSP hat die Aufgabe, alle schnellen Signale zu verarbeiten sowie Ströme, Spannungen, Drehzahlen und Drehmomente. Alle diese Größen werden überwacht und auf Plausibilität kontrolliert. Die Hauptaufgabe des DSP ist die Regelung des Motors. Der dritte Prozessor ist der FPGH. Hierbei handelt es sich um einen programmierbaren Logikbaustein. Er liest alle Ströme und Spannungen ein und ermittelt aus den Impulsen des Drehzahlgebers die Drehzahl und die Drehrichtung. Neben den genannten Prozessoren verfügt die Antriebssteuereinrichtung (DCU) 72 über eine Schnittstelle zum Multifunktionsbus, über einen internen DC/DC-Wandler zur Umsetzung der Speicherspannung in die DCU-internen Versorgungsspannungen, über elektrische und optische Ein-/Ausgabe-Module und über ein so genanntes Linetrip-Relais, das im Falle eines schweren DCU-Fehlers die Stromrichteranlage durch Öffnen des Haupt- und Ladeschutzes in einen sicheren Zustand überführt.

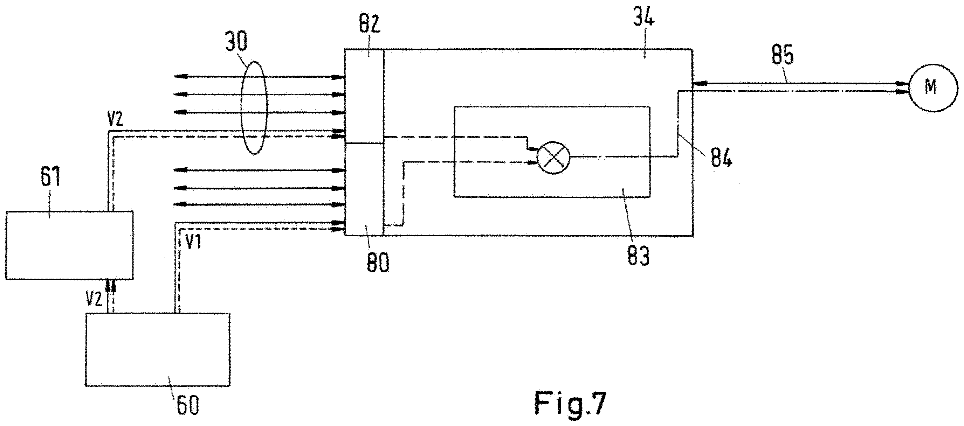

In der Fig. 7 ist die Anbindung des Winkelsensors 60 (vergleiche Fig. 6) an die Türsteuerung 34 gezeigt. Das gestrichelt gezeichnete Signal V1 ist ein analoges Signal, das aus dem Winkelsensor 60 in die Türsteuerung 34 eingegeben wird, wobei die Eingabe über einen von mehreren analogen Ein-/Ausgängen der Türsteuerung 34 erfolgt. Auf dem gestrichelt gekennzeichneten Weg V2 wird das Signal des Winkelsensors 60 zunächst in einen Analog-Digital-Wandler 61 eingespeist und von dort aus in einen der digitalen/Bus Ein-/Ausgänge 82 der Türsteuerung 34 eingespeist. Im Vergleich zum Weg V1 wird bei V2 das analoge Signal in ein Bus-Signal umgewandelt und über den Multifunktionsbus 30 an die Türsteuerung 34 geleitet. Das analoge (V1) oder digitale (V2) Signal aus dem Winkelsensor 60 wird mittels einer Signalverarbeitungseinrichtung (nicht gezeigt) in einen Winkel umgerechnet und der Winkelwert in die Türsteuerungssoftware, die in der Recheneinheit 83 hinterlegt ist, übermittelt. In der Türsteuerungssoftware wird der Winkelwert mit einem vorgegebenen Parameter, beispielsweise einem maximalen Knickwinkel zwischen Schienenfahrzeugteilen, verglichen und bei Überschreitung wird ein Signal 84 an den Antriebsmotor M der Tür geleitet. Durch das Signal 84 wird der Motor M gestoppt und eine Öffnung einer Tür oder eine weitere Öffnung einer Tür verhindert. Somit kann mittels des Signals 84 die Öffnungsweite einer mit dem Motor M verbundenen Tür begrenzt werden. Der Motor M der Tür ist mit einer Wegüberwachung und Rückmeldung 85 an die Türsteuerung 34 versehen. In der Fig. 7 ist das Prinzip einer Begrenzung der Türöffnungsweite durch eine Knickwinkelerkennung zwischen Schienenfahrzeugteilen gezeigt. Die Türöffnungsweite wird in Abhängigkeit verschiedener Parameter, beispielsweise der Fahrzeuglänge, als Funktion des Knickwinkels berechnet.

## Patentansprüche

1. Einrichtung zur Steuerung der Türöffnung bei zwei gelenkig miteinander verbundenen Schienenfahrzeugen und/oder zwei gelenkig miteinander verbundenen Schienenfahrzeugmodulen (2, 3), aufweisend:
- ein Gelenk mit einem Sensor (19; 40, 50, 60, 70), oder einer Sensoranordnung, wobei der Sensor oder die Sensoranordnung zur Bestimmung des Winkels zwischen den Längsachsen (X1, X2) der Schienenfahrzeuge oder Schienenfahrzeugmodule (2, 3) eingerichtet ist, wobei der Sensor (19) ein Winkelsensor ist, und
wobei das Gelenk so ausgestaltet ist, dass die zwei Schienenfahrzeuge oder zwei Schienenfahrzeugmodule (2, 3) relativ zueinander um eine senkrecht nach oben stehende Achse (Z) drehbar sind, die als Z-Achse bezeichnet wird, wobei
die zwei Schienenfahrzeuge oder zwei Schienenfahrzeugmodule (2, 3) relativ zueinander
- um die Längsachse (X1, X2) eines der Schienenfahrzeuge oder Schienenfahrzeugmodule (2, 3), welche als X-Achse bezeichnet wird, drehbar sind, und/oder
- um eine quer zu einem der Schienenfahrzeuge oder Schienenfahrzeugmodule (2, 3) und senkrecht zu der Z-Achse und der X-Achse stehende Achse (Y), welche als Y-Achse bezeichnet wird, drehbar sind, wobei
die X-Achse und/oder die Y-Achse die Z-Achse in einem Punkt schneiden, der als Gelenkpunkt (G) bezeichnet wird,
wobei der Sensor (19) am Ort des Gelenkpunkts (G) oder nahe bei dem Ort des Gelenkpunkts (G) angeordnet ist,
- eine Signalverarbeitungseinrichtung (80, 81, 82), in der das Signal des Sensors (19; 40, 50, 60, 70) oder der Sensoranordnung verarbeitbar ist und mit der der Winkel zwischen den Längsachsen (X1, X2) der Schienenfahrzeuge oder Schienenfahrzeugmodule (2, 3) bestimmbar ist,
und folgende Einrichtung:
- eine Steuerungseinrichtung (34) zur Steuerung der Türöffnung, welche die Information über den Winkel zwischen den Längsachsen (X1, X2) der Schienenfahrzeuge oder Schienenfahrzeugmodule (2, 3) von der Signalverarbeitungseinrichtung (81) erhält und mit der auf Grundlage des Winkels die Türöffnung steuerbar ist,

2. Einrichtung nach Anspruch 1, wobei der/die Sensor(en) oder die Sensoranordnung(en) zur kontinuierlichen Bestimmung des Winkels eingerichtet ist/sind oder zur Bestimmung diskreter Winkelwerte in einer bestimmten Schrittweite eingerichtet ist/sind.

3. Verfahren zur Bestimmung des Winkels zwischen den Längsachsen (X1, X2) von zwei Schienenfahrzeugen oder zwei Schienenfahrzeugmodulen (2, 3), und weiterhin zur Steuerung der Öffnung einer Tür der zwei Schienenfahrzeuge oder zwei Schienenfahrzeugmodule (2, 3),
wobei die Schienenfahrzeuge oder Schienenfahrzeugmodule mit einem Gelenk verbunden sind, das einen Sensor (19) oder eine Sensoranordnung aufweist, wobei der Sensor (19) ein Winkelsensor ist, und
wobei das Gelenk so ausgestaltet ist, dass die zwei Schienenfahrzeuge oder zwei Schienenfahrzeugmodule (2, 3) relativ zueinander um eine senkrecht nach oben stehende Achse (Z) drehbar sind, die als Z-Achse bezeichnet wird, und
wobei die zwei Schienenfahrzeuge oder zwei Schienenfahrzeugmodule (2, 3) relativ zueinander
- um die Längsachse (X1, X2) eines der Schienenfahrzeuge oder Schienenfahrzeugmodule (2, 3), welche als X-Achse bezeichnet wird, drehbar sind, und/oder
- um eine quer zu einem der Schienenfahrzeuge oder Schienenfahrzeugmodule (2, 3) und senkrecht zu der Z-Achse und der X-Achse stehende Achse (Y), welche als Y-Achse bezeichnet wird, drehbar sind, wobei
die X-Achse und/oder die Y-Achse die Z-Achse in einem Punkt schneiden, der als Gelenkpunkt (G) bezeichnet wird,
wobei der Sensor (19) am Ort des Gelenkpunkts (G) oder nahe bei dem Ort des Gelenkpunkts (G) angeordnet ist, und wobei der Sensor oder die Sensoranordnung des Gelenks zur Bestimmung des Winkels zwischen den Längsachsen (X1, X2) der Schienenfahrzeuge oder der Schienenfahrzeugmodule (2, 3) eingerichtet ist, wobei bei dem Verfahren
a) im Sensor (19; 40, 50, 60, 70) ein vom Winkel zwischen den Längsachsen der Schienenfahrzeuge oder Schienenfahrzeugmodule abhängiges Signal erzeugt wird, oder im Sensor bei der Drehung der Schienenfahrzeuge oder Schienenfahrzeugmodule zueinander eine Signalfolge erzeugt wird,
b) das erzeugte Signal oder die Signalfolge an eine Signalverarbeitungseinrichtung (80, 81, 82) weitergeleitet wird, die das Signal/die Signalfolge verarbeitet und den Winkel zwischen den Längsachsen (X1, X2) der Schienenfahrzeuge oder Schienenfahrzeugmodule (2, 3) bestimmt, und
die ermittelte Information über den Winkel zwischen den Längsachsen (X1, X2) der Schienenfahrzeuge oder Schienenfahrzeugmodule (2, 3) an eine Steuerungseinrichtung (34) weitergeleitet wird, die auf Grundlage des Winkels die Öffnung der Tür steuert.

## Claims

1. A device for controlling the door opening in two rail vehicles connected to one another in an articulated manner and/or two rail vehicle modules (2, 3) connected to one another in an articulated manner, comprising:
- a coupling having a sensor (19; 40, 50, 60, 70) or a sensor arrangement, wherein the sensor or the sensor arrangement is designed for determining the angle between the longitudinal axes (X1, X2) of the rail vehicles or rail vehicle modules (2, 3),
the sensor (19) being an angle sensor, and
the coupling being embodied such that the two rail vehicles or two rail vehicle modules (2, 3) can be rotated relative to one another about a vertically upwardly standing axis (Z), called the Z axis,
wherein
the two rail vehicles or two rail vehicle modules (2, 3) can be rotated relative to one another
- about the longitudinal axis (X1, X2) of one of the rail vehicles or rail vehicle modules (2, 3), called the X axis, and/or
- about an axis (Y) standing transverse to one of the rail vehicles or rail vehicle modules (2, 3) and perpendicular to the Z axis and X axis, called the Y axis, wherein
the X axis and/or the Y axis intersect the Z axis at one point, which is called the articulation point (G),
wherein the sensor (19) is arranged at the site of the articulation point (G) or in the vicinity of the articulation point (G),
- a signal processing device (80, 81, 82) in which the signal of the sensor (19; 40, 50, 60 70) or of the sensor arrangement can be processed and with which the angle between the longitudinal axes (X1, X2) of the rail vehicles or rail vehicle modules (2, 3) can be determined,
and the following device:
- a control device (34) for controlling the door opening that obtains the information about the angle between the longitudinal axes (X1, X2) of the rail vehicles or of the rail vehicle modules (2, 3) from the signal processing device (81) and with which the door opening can be controlled based on the angle.

2. The device according to claim 1, wherein the sensor(s) or sensor arrangement(s) is/are designed for continuously determining the angle or is/are designed for determining discrete angle values in a specific range.

3. A method for determining the angle between the longitudinal axes (X1, X2) of two rail vehicles or two rail vehicle modules (2, 3), and furthermore for controlling the opening of a door of the two rail vehicles or two rail vehicle modules (2, 3) wherein the rail vehicles or rail vehicle modules being connected with a coupling, which comprises a sensor (19) or a sensor arrangement, the sensor (19) being an angle sensor, and
wherein the coupling is embodied such that the two rail vehicles or two rail vehicle modules (2, 3) can be rotated relative to one another about a vertically upwardly standing axis (Z), called the Z axis,
wherein the two rail vehicles or two rail vehicle modules (2, 3) can be rotated relative to one another
- about the longitudinal axis (X1, X2) of one of the rail vehicles or rail vehicle modules (2, 3), called the X axis, and/or
- about an axis (Y) standing transverse to one of the rail vehicles or rail vehicle modules (2, 3) and perpendicular to the Z axis and X axis, called the Y axis, wherein
the X axis and/or the Y axis intersect the Z axis at one point, which is called the articulation point (G),
wherein the sensor (19) is arranged at the site of the articulation point (G) or in the vicinity of the articulation point (G), wherein the sensor or the sensor arrangement is designed for determining the angle between the longitudinal axes (X1, X2) of the rail vehicles or rail vehicle modules (2, 3), wherein in the method
a) a signal dependent on the angle between the longitudinal axes of the rail vehicles or rail vehicle modules is generated in the sensor (19; 40, 50, 60, 70), or a signal sequence is generated in the sensor when the rail vehicles or rail vehicle modules rotate relative to one another,
b) the generated signal or the signal sequence is forwarded to a signal processing device (80, 81, 82) that processes the signal/signal sequence and determines the angle between the longitudinal axes (X1, X2) of the rail vehicles or rail vehicle modules (2, 3), and
the information determined about the angle between the longitudinal axes (X1, X2) of the rail vehicles or rail vehicle modules (2, 3) is forwarded to a control device (34) that controls the opening of the door based on the angle.

## Revendications

1. Dispositif de commande de l'ouverture de porte pour deux véhicules sur rails reliés entre eux de manière articulée et/ou deux modules de véhicule sur rails (2, 3) reliés entre eux de manière articulée, présentant :
- une articulation avec un capteur (19 ; 40, 50, 60, 70) ou un ensemble de capteurs, le capteur ou l'ensemble de capteurs étant conçu pour déterminer l'angle entre les axes longitudinaux (X1, X2) des véhicules sur rails ou des modules de véhicule sur rails (2, 3),
le capteur (19) étant un capteur angulaire, et
l'articulation est conçue de sorte que les deux véhicules sur rails ou les deux modules de véhicule sur rails (2, 3) peuvent tourner l'un par rapport à l'autre autour d'un axe (Z) perpendiculaire vers le haut, qui est désigné en tant qu'axe Z,
où
les deux véhicules sur rails ou les deux modules de véhicule sur rails (2, 3) peuvent tourner l'un par rapport à l'autre
- autour de l'axe longitudinal (X1, X2) d'un des véhicules sur rails ou modules de véhicule sur rails (2, 3), lequel est désigné en tant qu'axe X, et/ou
- autour d'un axe (Y) situé de manière transversale par rapport à un des véhicules sur rails ou modules de véhicule sur rails (2, 3) et de manière perpendiculaire par rapport à l'axe Z et à l'axe X, lequel est désigné en tant qu'axe Y, où
l'axe X et/ou l'axe Y coupent l'axe Z en un point, qui est désigné en tant que point d'articulation (G),
le capteur (19) étant disposé au niveau de l'emplacement du point d'articulation (G) ou à proximité de l'emplacement du point d'articulation (G),
- un dispositif de traitement de signaux (80, 81, 82), dans lequel le signal du capteur (19 ; 40, 50, 60, 70) ou de l'ensemble de capteurs peut être traité et avec lequel l'angle entre les axes longitudinaux (X1, X2) des véhicules sur rails ou des modules de véhicule sur rails (2, 3) peut être défini,
et dispositif suivant :
- un dispositif de commande (34) servant à commander l'ouverture de porte, lequel reçoit l'information sur l'angle entre les axes longitudinaux (X1, X2) des véhicules sur rails ou modules de véhicule sur rails (2, 3) du dispositif de traitement de signaux (81) et avec lequel l'ouverture de porte peut être commandée sur la base de l'angle.

2. Dispositif selon la revendication 1, dans lequel le/les capteur(s) ou l'ensemble (les ensembles) de capteurs est/sont conçu(s) pour déterminer en continu l'angle ou est/sont conçu(s) pour déterminer des valeurs d'angle discrètes selon un incrément défini.

3. Procédé de détermination de l'angle entre les axes longitudinaux (X1, X2) de deux véhicules sur rails ou deux modules de véhicule sur rails (2, 3), ainsi que de commande de l'ouverture d'une porte de deux véhicules sur rails ou deux modules de véhicule sur rail (2, 3),
les véhicules sur rails ou modules de véhicule sur rails étant liés par une articulation présentant un capteur (19) ou un ensemble de capteurs, le capteur (19) étant un capteur angulaire, et
l'articulation étant conçue de sorte que les deux véhicules sur rails ou les deux modules de véhicule sur rails (2, 3) peuvent tourner l'un par rapport à l'autre autour d'un axe (Z) perpendiculaire vers le haut, qui est désigné en tant qu'axe Z, et
les deux véhicules sur rails ou les deux modules de véhicule sur rails (2, 3) peuvent tourner l'un par rapport à l'autre
- autour de l'axe longitudinal (X1, X2) d'un des véhicules sur rails ou modules de véhicule sur rails (2, 3), lequel est désigné en tant qu'axe X, et/ou
- autour d'un axe (Y) situé de manière transversale par rapport à un des véhicules sur rails ou modules de véhicule sur rails (2, 3) et de manière perpendiculaire par rapport à l'axe Z et à l'axe X, lequel est désigné en tant qu'axe Y, où
l'axe X et/ou l'axe Y coupent l'axe Z en un point, qui est désigné en tant que point d'articulation (G),
le capteur (19) étant disposé au niveau de l'emplacement du point d'articulation (G) ou à proximité de l'emplacement du point d'articulation (G), et le capteur ou
l'ensemble de capteurs de l'articulation étant conçu pour déterminer l'angle entre les axes longitudinaux (X1, X2) des véhicules sur rails ou des modules de véhicule sur rails (2, 3), où dans le procédé
a) un signal dépendant de l'angle entre les axes longitudinaux des véhicules sur rails ou modules de véhicule sur rails est généré dans le capteur (19 ; 40, 50, 60, 70), ou une succession de signaux est générée dans le capteur lors de la rotation des véhicules sur rails ou modules de véhicule sur rails,
b) le signal généré ou la succession de signaux est transmis(e) au dispositif de traitement de signaux (80, 81, 82), qui traite le signal/la succession de signaux et définit l'angle entre les axes longitudinaux (X1, X2) des véhicules sur rails ou modules de véhicule sur rails (2, 3), et
les informations sur l'angle entre les axes longitudinaux (X1, X2) des véhicules sur rails ou modules de véhicule sur rail (2, 3) sont transférées à un dispositif de commande (34), qui commande l'ouverture de la porte sur la base de l'angle.
